# EUROPÄISCHE PATENTSCHRIFT

(11) **EP 0 957 733 B1**
(45) Veröffentlichungstag und Bekanntmachung des Hinweises auf die Patenterteilung: **10.04.2002**
(21) Anmeldenummer: 98900053.4
(22) Anmeldetag: 12.01.1998
(51) Int. Cl.: A47G 1/06, A47G 1/10

(54) **RAHMENELEMENT FÜR BILDERRAHMEN**
FRAME ELEMENT FOR A PICTURE FRAME
ELEMENT DE CADRE DESTINE A UN CADRE POUR TABLEAUX

(30) Priorität: 16.01.1997 AT 2797
(43) Veröffentlichungstag der Anmeldung: 24.11.1999
(73) Patentinhaber: Taussig, Doris, 1190 Wein (AT)
(72) Erfinder: Taussig, Doris, 1190 Wein (AT)
(74) Vertreter: Haffner, Thomas M., Dr.
(86) Internationale Anmeldenummer: AT9800002
(87) Internationale Veröffentlichungsnummer: WO9831264

(56) Entgegenhaltungen:
- CH-A- 686 553
- FR-A- 2 632 509
- GB-A- 2 286 526
- US-A- 5 246 304

## Beschreibung

Die Erfindung bezieht sich auf ein Rahmenelement für Bilderrahmen.

Bilderrahmen, insbesondere Rahmen für Fotografien, werden in unterschiedlichen Dimensionen und unterschiedlichen Ausstattungen angeboten. Neben Bilderrahmen mit nur geringen ornamentalen Verzierungen sind eine Reihe von Ausbildungen bekanntgeworden, bei welchen die Rahmenelemente mehr oder minder aufwendig profiliert bzw. verziert ausgebildet sind. Rahmen mit besonders aufwendigem Dekor führen allerdings beim Betrachter zumeist nach einer bestimmten Zeit dazu, daß der Rahmen nicht mehr als passend empfunden wird. Umgekehrt gelingt es trotz der großen Vielzahl von unterschiedlichen Rahmen nicht immer den für einen bestimmten dekorativen Effekt gewünschten Rahmen innerhalb des großen zur Verfügung stehenden Sortiments aufzufinden, wodurch der Wunsch zum nachträglichen Abändern oder Dekorieren von Rahmen zur Anpassung an bestimmte Anlässe oder eine bestimmte Umgebung verständlich wird.

Die FR-A-2 632 509 zeigt und beschreibt einen Bilderrahmen, welcher im wesentlichen aus vier länglichen Profilen sowie aus vier Eckverbindungen besteht, welche in die Stirnseiten der Profile einschiebbar sind. An der länglichen Profilseite sind längliche Rippen vorgesehen, an welchen über die Profile bzw. über die Eckverbindungen aufschiebbare Dekorativelemente befestigbar sind.

Aus der GB-A-2 286 526 ist ein Rahmensystem bekannt geworden, bei welchen Profilleisten vorgesehen sind, welche an den Außenseiten Fugen für die Aufnahme von Dekorationselementen aufweisen. Als Dekorationselemente werden dabei z.B. Eckelemente oder Ziergiebel verwendet, welche z.B. mit Leim an der Außenseite des Rahmens befestigt werden können.

Aus der CH-A-686 553 ist ein Winkelelement für das Zusammenstellen von Profilen zu Rahmen bekannt geworden. Dabei werden die Profilleisten in die einstückig ausgebildeten Winkelelemente eingeschoben, wobei die Innenoberfläche des Winkelelementes entsprechend dem Außenprofil der Profilleisten gestaltet ist, sodaß sich eine genaue Passung der Profilleisten in den Winkelelementen ergibt. Das Winkelelement kann dabei Öffnungen für die Befestigung von weiteren Dekorativelementen aufweisen.

Die Erfindung zielt darauf ab, ein Rahmenelement für Bilderrahmen zu schaffen, mit welchem es in einfacher Weise möglich ist, nachträglich einfach Rahmen in ihrem ästhetischen Gesamteindruck grundsätzlich zu verändern, ohne daß hiefür aufwendige Adaptierungsarbeiten erforderlich sind.

Zur Lösung dieser Aufgabe besteht die Erfindung in einem Rahmenelement für Bilderrahmen, mit einem unteren Tragelement, in das ein oberes Tragelement so eingeschoben ist, daß das Rahmenelement an beliebige Rahmenhöhen angepaßt werden kann, wobei die Tragelemente die Rahmenecke umgreifen, und wobei an der Oberseite des oberen Tragelementes eine Ausnehmung nach Art eines Druckknopfes mit einem entsprechenden Kupplungsglied eines Dekorelementes zusammenwirkt, sodaß nach dem Schließen des Druckknopfverschlusses das Dekorelement in seiner Position verdrehbar ist.

Dadurch, daß zwei miteinander verbindbare, die Rahmenecken umgreifende Tragelemente vorgesehen sind, wobei in das untere Tragelement das obere Tragelement eingeschoben ist, können universelle Elemente vorgeschlagen werden, welche in einfacher Weise an beliebige Rahmenhöhen und Rahmenformen angepaßt werden können. Die Tragelemente umgreifen hiebei die Rahmenecken und können in einfacher Weise lösbar miteinander verbunden werden.

Dadurch, daß jeweils ein Tragelement eine Aufnahmeeinrichtung in Form eines Druckknopfes aufweist, der mit einem entsprechenden Kupplungsglied eines Dekorelementes zusammenwirkt und mit diesem lösbar verbindbar ist, gelingt es nun an derartigen Tragele-menten beliebig geformte und beliebig gestaltete Dekorelemente anzubringen, wodurch sich insgesamt das Aussehen des Rahmens grundlegend verändern läßt. Die Dekorelemente können hiebei besonders einfach ausgebildet sein und eignen sich auch für eine nachträgliche individuelle Gestaltung durch den Anwender. Dekorelemente können in einfacher Weise mit Stoff überzogen werden oder bemalt werden, sodaß sich insgesamt ein individueller und persönlicher Gestaltungsspielraum ergibt.

Gemäß einer bevorzugten Weiterbildung des erfindungsgemäßen Rahmenelementes ist die Ausbildung so getroffen, daß die Tragelemente jeweils wenigstens einen Bolzen bzw. eine Hülse tragen, in welche der Bolzen bzw. die Hülse des zugeordneten zweiten Tragelementes einschiebbar ist. Auf diese Weise lassen sich die Tragelemente in einfacher Weise miteinander verbinden, wobei die Passung zwischen Bolzen und Hülse so getroffen werden kann, daß der Bolzen in die Hülse formschlüssig eingeschoben werden kann und auf diese Weise den für das Tragen des Dekorelementes erforderlichen Halt sicherstellt.

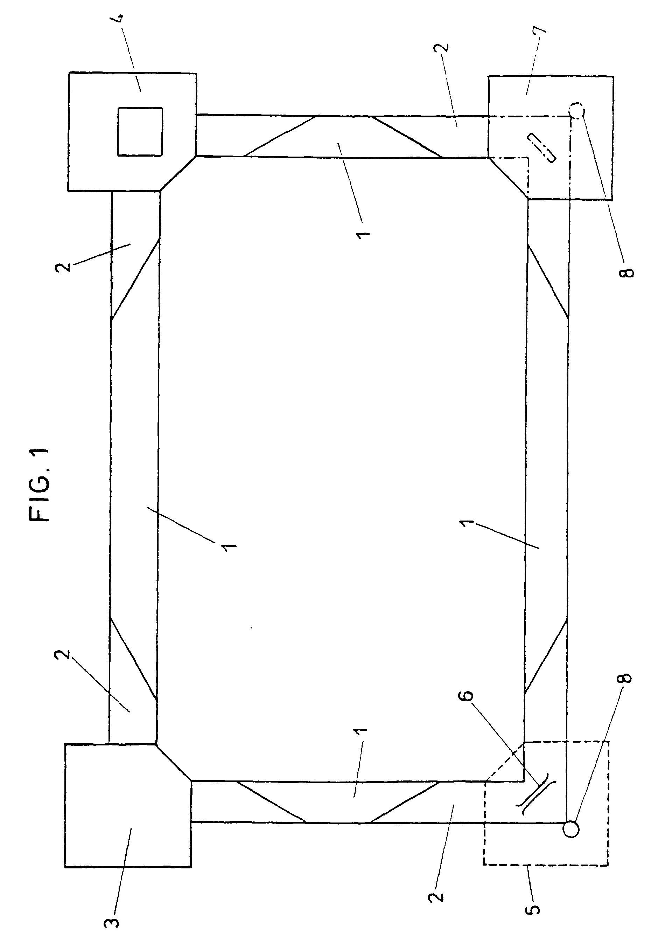

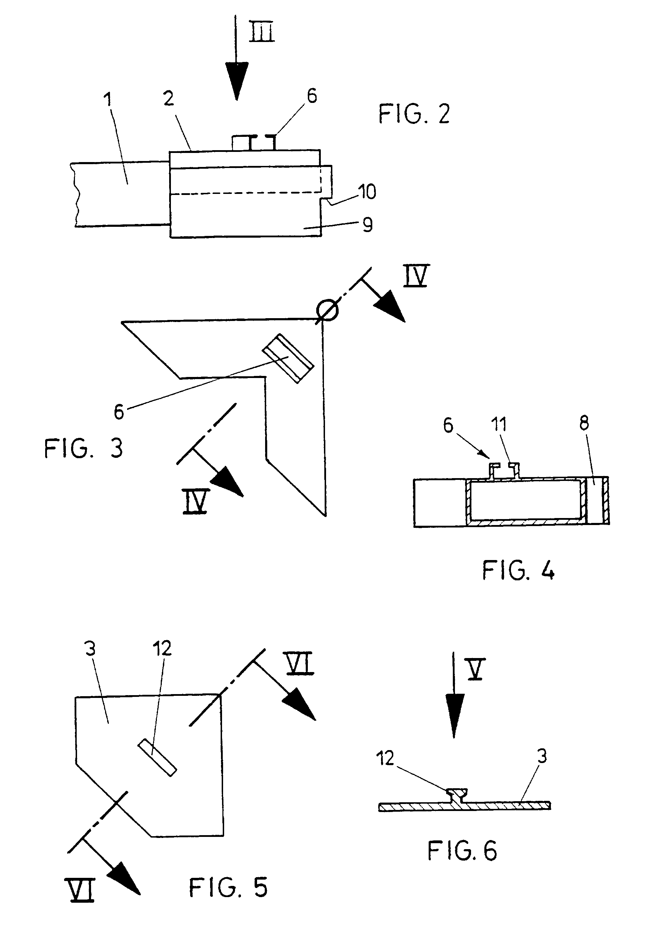

Die Erfindung wird nachfolgend anhand von in der Zeichnung schematisch dargestellten Ausführungsbeispielen näher erläutert, wobei jedoch die Aufnahmeeinrichtung in der Zeichnung in Form einer nicht erfindungsgemäßen Schiene anstelle des erfindungsgemäßen Druckknopfes dargestellt ist. In dieser zeigen Fig. 1 eine Draufsicht auf einen Rahmen mit den Tragelementen sowie Dekorelementen, Fig. 2 eine Seitenansicht auf einen Rahmen mit aufgesteckten Tragele-menten bei abgenommenem Dekorelement, Fig. 3 eine Ansicht in Richtung des Pfeiles III der Fig. 2, Fig. 4 einen Schnitt nach der Linie IV-IV durch ein Tragelement, Fig. 5 eine Draufsicht auf ein Dekorelement für die Verriegelung in einem Tragelement nach den Fig. 2, 3 oder 4 und Fig. 6 einen Schnitt durch ein Dekorelement nach Fig. 5 nach der Linie VI-VI der Fig. 5, wobei Fig. 5 eine Draufsicht im Sinne des Pfeiles V der Fig. 6 darstellt.

In Fig. 1 ist ein Rahmen dargestellt, dessen Rahmenholme mit 1 bezeichnet sind. Auf die Ecken eines derartigen Rahmens werden Tragelemente 2 aufgesteckt. Im linken oberen Eck der Fig. 1 ist hiebei ein erstes Dekorelement 3 ersichtlich, welches mit einem derartigen Tragelement 2 verriegelt ist. Das rechte obere Eck des Rahmens nach Fig. 1 weist ein abgewandeltes Dekorelement 4 auf. In der linken unteren Ecke des Rahmens nach Fig. 1 ist das Dekorelement mit strichlierten Linien 5 angedeutet, wobei eine Aufnahmeeinrichtung in Form einer Schiene 6 an der Oberseite des Tragelementes 2 ersichtlich ist. Im rechten unteren Eck ist die Kontur des Rahmens bzw. des Tragelementes 2 unterhalb des Dekorelementes 7 strichpunktiert dargestellt. In den beiden unteren Ecken der Fig. 1 sind jeweils Hülsen 8 ersichtlich, in welche entsprechende Bolzen des darunterliegenden Tragelementes 2 eingeschoben werden können, um auf diese Weise die Ecken des Rahmens zu umgreifen.

Bei der Darstellung nach Fig. 2 ist ersichtlich, daß das obere Tragelement 2 in ein unteres Tragelement 9 eingeschoben ist. Das untere Tragelement 9 ist hiebei gekröpft ausgebildet, wobei die vorspringende Kante mit 10 bezeichnet ist, sodaß das obere Tragelement 2 in das untere Tragelement 9 eingeschoben werden kann. An der Oberseite des oberen Tragelementes ist wiederum eine von einer Schiene gebildeten Aufnahmeeinrichtung für ein Kupplungsglied ersichtlich. Die Tragelemente 2 und 9 umgreifen die Rahmenecken, sodaß auch in der Seitenansicht ein ästhetisches Aussehen sichergestellt ist. In Fig. 3 und 4 ist jeweils die Hülse 8 für die Aufnahme des Bolzens des darunterliegenden Tragelementes ersichtlich, wobei, wie insbesondere in Fig. 4 dargestellt, die Aufnahmeeinrichtung 6 für das Kupplungsglied einwärtsspringende Ränder 11 aufweist, um auf diese Weise eine kraftschlüssige Verbindung bei der Festlegung des Dekorelementes zu gewährleisten.

In den Fig. 5 und 6 ist nun das Dekorelement dargestellt, welches in diesen Figuren wiederum mit 3 bezeichnet ist. Das Dekorelement 3 weist an seiner dem Tragelement 2 zugewandten Seite ein Kupplungsglied 12 auf, welches mit der Aufnahmeeinrichtung 6 für das Kupplungsglied verrastet werden kann, wenn die Aufnahmeeinrichtung 6 und/oder das Kupplungsglied 12 entsprechend elastisch verformbar ist. Alternativ kann das Kupplungsglied 12 auch seitlich in die Aufnahmeeinrichtung 6 eingeschoben werden und in die gewünschte Position verschoben werden. Das Kupplungsglied 12 und die Aufnahmeeinrichtung 6 sind hiebei jeweils so dimensioniert, daß in der gewünschten Lage eine kraftschlüssige Festlegung erfolgt.

## Patentansprüche

1. Rahmenelement für Bilderrahmen, mit einem unteren Tragelement (9), in das ein oberes Tragelement (2) so eingeschoben ist, daß das Rahmenelement an beliebige Rahmenhöhen angepaßt werden kann, wobei die Tragelemente (2,9) die Rahmenecke umgreifen, und wobei an der Oberseite des oberen Tragelementes (2) eine Ausnehmung nach Art eines Druckknopfes mit einem entsprechenden Kupplungsglied (12) eines Dekorelementes (3) zusammenwirkt, sodaß nach dem Schließen des Druckknopfverschlusses das Dekorelement (3) in seiner Position verdrehbar ist.

2. Rahmenelement nach Anspruch 1, **dadurch gekennzeichnet, daß** die Tragelemente (2) jeweils wenigstens einen Bolzen bzw. eine Hülse (8) tragen, in welche der Bolzen bzw. die Hülse (8) des zugeordneten zweiten Tragelementes (9) einschiebbar ist.

## Claims

1. A frame element for picture frames, comprising a lower carrying element (9) inserted in an upper carrying element (2) in a manner that the frame element can be adapted to any desired frame heights, wherein the carrying elements (2, 9) encompass the corner of the frame and wherein, on the upper side of the upper carrying element (2), a recess configured like a push-button cooperates with an accordingly designed coupling member (12) of a decoration element (3) in a manner that the decoration element (3) is rotatable in its position upon closure of the push-button closure.

2. A'frame element according to claim 1, **characterized in that** the carrying elements (2) each carry at least one pin or sleeve (8), respectively, into which the sleeve (8) or pin, respectively, of the associated second carrying element (9) is insertable.

## Revendications

1. Elément de cadre destiné à un cadre pour tableaux, avec un élément de support inférieur (9) dans lequel est inséré un élément de support supérieur (2), de telle sorte que l'élément de cadre puisse être ajusté selon une hauteur de cadre quelconque, moyennant quoi les éléments de support (2, 9) entourent les coins du cadre, et moyennant quoi, sur la face supérieure de l'élément de support supérieur (2), un évidement à la façon d'un bouton-poussoir agit conjointement avec un élément d'accouplement correspondant (12) d'un élément de décoration (3), de telle sorte qu'après la fermeture du dispositif de verrouillage à bouton-poussoir, l'élément de décoration (3) puisse être pivoté dans sa position.

2. Elément de cadre selon la revendication 1, **caractérisé en ce que** les éléments de support (2) portent respectivement au moins un boulon ou une douille (8), dans lesquels peut être inséré le boulon ou la douille (8) du second élément de support associé (9).
